# EUROPÄISCHE PATENTSCHRIFT

(11) **EP 1 525 064 B1**
(45) Veröffentlichungstag und Bekanntmachung des Hinweises auf die Patenterteilung: **25.01.2006**
(21) Anmeldenummer: 03766061.0
(22) Anmeldetag: 30.07.2003
(51) Int. Cl.: B22F 3/02

(54) **VERFAHREN ZUR HERSTELLUNG EINES FORMTEILES**
METHOD FOR PRODUCING A MOULDED PART
PROCEDE DE PRODUCTION D'UNE PIECE MOULEE

(30) Priorität: 01.08.2002 AT 20020514
(43) Veröffentlichungstag der Anmeldung: 27.04.2005
(73) Patentinhaber: PLANSEE GMBH, 6600 Reutte (AT)
(72) Erfinder: ZOBL, Gebhard, A-6677 Schattwald (AT); GLATZ, Wolfgang, A-6600 Reutte (AT); KRAUSSLER, Wolfgang, A-6671 Weissenbach (AT); OBERBREYER, Robert, A-6600 Reutte (AT)
(86) Internationale Anmeldenummer: PCT/AT2003/000217
(87) Internationale Veröffentlichungsnummer: WO 2004/012885

(56) Entgegenhaltungen:
- EP-A- 1 033 193
- EP-A- 1 083 034
- WO-A-02/055747

## Beschreibung

Die Erfindung betrifft ein Verfahren zur Herstellung eines Formteiles, bestehend aus einem scheiben- oder plattenförmigen Grundkörper mit einer Vielzahl von noppen- und/oder stegförmigen Erhebungen, die mit geneigten Seitenflächen in den Grundkörper übergehen, durch endformnahes Pressen und Sintern pulverförmiger Ausgangsmaterialien.

Beispiele für derartig komplex geformte Formteile sind Interkonnektoren, auch als bipolare Platte oder Stromsammler bezeichnet, von Brennstoffzellen. Neben einer möglichst gleichförmigen hohen Dichte dieser Formteile und einer guten Maßhaltigkeit um die in der Regel geforderte Gasdichtheit zu gewährleisten, ist auch eine wirtschaftliche Herstellungsmöglichkeit dieser Formteile die Grundvoraussetzung um eine Fertigung im Produktionsmaßstab zu ermöglichen.

Die Herstellung der Endform derartiger Formteile durch spanabhebende Bearbeitung aus Halbzeug ist sehr kostenintensiv, so dass eine pulvermetallurgische Fertigung mit möglichst endformnaher Formgebung anzustreben ist. Problematisch dabei ist, dass insbesondere für Interkonnektoren von Hochtemperatur Brennstoffzellen vielfach hoch chromhaltige Legierungen eingesetzt werden, die bei niederen Temperaturen spröde sind und in Form von Pulvern nur sehr schwer verpresst werden können.
Bei einfacheren Geometrien der Formteile kann eine Unterteilung des Pressstempels in mehrere, unabhängig voneinander bewegliche Einzelelemente eine Verbesserung bringen. Bei Interkonnektoren, die auf einem scheiben- oder plattenförmigen Grundkörper vielfach mehrere hundert noppenförmige und stegförmige Erhebungen aufweisen, ist eine sinnvolle Unterteilung der Pressstempel jedoch technisch nicht mehr machbar.

Die Herstellung derartiger Bauteile durch Pulverspritzgusstechniken ist ebenfalls problematisch, wegen der vielfach nicht ausreichenden Materialdichte und Maßhaltigkeit aufgrund zu großer und unregelmäßiger Schwundprozesse im Zuge des Herstellungsverfahrens.

Die EP 1 195 829 beschreibt ein Verfahren zur Herstellung einer Bipolarplatte für Brennstoffzellen, bei dem eine gasundurchlässige Grundplatte mit einer Vielzahl von Vorsprüngen, welche die Gasführung regeln sollen, verbunden wird. Die Vorsprünge welche im Übergang zur Grundplatte geneigte Seitenflächen aufweisen, werden dabei unter anderem durch Pressen einer verformbaren Masse mit Hilfe eines profilierten Stempels in einem einstufigen Pressverfahren hergestellt.

Dieses einfache Herstellungsverfahren ist für die spezielle beschriebene Bipolarplatte ausreichend, da die Vorsprünge nicht dicht sein müssen, sondern porös und gasdurchlässig sein können und aus einer leicht verformbaren Masse aus kunststoffgebundenen Fasern oder Fäden, z.B. aus Graphit, gebildet werden. Für schwer verpressbare pulverförmige Ausgangsmaterialien ist ein derartiges Herstellungsverfahren jedoch nicht geeignet.

Die WO 01/83132 beschreibt ebenfalls ein Verfahren zur Herstellung eines plattenförmigen Grundkörpers mit einer Vielzahl von noppen- und stegförmigen Erhebungen, beispielsweise zur Verwendung in Brennstoffzellen oder in Wärmetauschem, unter anderem auch aus pulverförmigen Ausgangsmaterialien.
Bei diesem Verfahren wird in einem ersten Schritt ein Zwischenprodukt hergestellt, das im wesentlichen plattenförmig ohne die ausgeformten Erhebungen ist, das aber schon der Materialmenge des fertig geformten Formkörpers entspricht. Dann wird mit Hilfe von Pressstempeln in einem einzigen Schritt die endformnahe Form des Formteiles hergestellt.

Nachteilig bei einem derartigen Verfahren ist, dass bei Verwendung pulverförmiger Ausgangsmaterialien die Verdichtung in den Erhebungen nicht sehr gleichmäßig ist und daher Zonen mit unerwünschter Porosität auftreten und/oder die benötigten Pressdrücke unverhältnismäßig hoch sind. Insbesondere beim Pressen schwer verpressbarer Pulver kann es dazu kommen, dass die Pressdrücke selbst bei den größten derzeitig verfügbaren Pressen nicht mehr ausreichend sind.

Die Aufgabe der vorliegenden Erfindung ist es daher ein Verfahren zur Herstellung von Formteilen aus einem scheiben- oder plattenförmigen Grundkörper mit einer Vielzahl noppen- und/oder stegförmiger Erhebungen zu schaffen, mit dem die Formteile auch bei schwer verpressbaren Pulvern auf einfache Weise kostengünstig mit ausreichender Dichte und Homogenität hergestellt werden können.

Erfindungsgemäß wird dies dadurch erreicht, dass das Pressen in einem zweistufigen Pressvorgang erfolgt, wobei in der ersten Stufe die Begrenzungsflächen des Grundkörpers bis zu den Übergangsbereichen der Erhebungen hin auf zumindest angenäherte Endform gepresst und gleichzeitig die Erhebungen mit Übermaß gepresst werden, und zwar derart, dass ihr Überstand h' vom Grundkörper gegenüber dem Überstand h vom Grundkörper im fertig gepressten Zustand um 10 % ― 150 % größer ist und dass ihre Seitenflächen einen Neigungswinkel α' im Bereich von 90° - 150° mit der jeweils angrenzenden Begrenzungsfläche des Grundkörpers einschließen und wobei in der zweiten Stufe die Erhebungen auf zumindest angenäherte Endform gepresst werden, derart, dass der Neigungswinkel α' auf einen Wert α vergrößert wird der im Bereich von 95° - 170° liegt.

Das erfindungsgemäße Pressverfahren wird insbesondere bei der Herstellung von Formteilen mit ungünstigen Pressverhältnissen zur Anwendung kommen die dann vorliegen, wenn viele einzelne Teilbereiche des Formteiles unterschiedliche Abmessungen in Pressrichtung aufweisen, die mindestens etwa im Verhältnis 1:2 in dieser Richtung differieren. Diese Verhältnisse treten beispielsweise bei Formteilen mit steg- und/oder noppenförmigen Erhebungen, wie sie als Interkonnektoren für Brennstoffzellen eingesetzt werden auf. Das spezielle erfindungsgemäße zweistufige Pressverfahren arbeitet in jeder Stufe mit unterschiedlichen Pressstempeln. In der ersten Stufe sind die mindestens aus einem Oberstempel und einem Uriterstempel bestehenden Pressstempel so aufeinander abgestimmt, dass die Begrenzungsflächen des scheiben- oder plattenförmigen Grundkörpers auf möglichst hohe Pressdichte verdichtet werden und damit zumindest angenähert die gewünschte Endform aufweisen. Lediglich das nach dem Ausstoßen des Presslings aus der Matrize auftretende elastische Rückfedem und der bei der nachfolgenden Sinterung auftretende Schwund verändern in Abhängigkeit vom verwendeten Werkstoff die Abmessungen des Presslings in diesen Bereichen. Die noppen- und/oder stegförmigen Erhebungen hingegen werden in der ersten Stufe noch nicht auf eine möglichst hohe Pressdichte verdichtet und weisen daher gegenüber ihrer Endform Übermaß auf. In der zweiten Pressstufe sind die Aressstempel so aufeinander abgestimmt, dass die Begrenzungsflächen des scheiben- oder plattenförmigen Grundkörpers nur mehr geringfügig oder nicht mehr weiter verdichtet werden. Die noppen- und/oder stegförmigen Erhebungen hingegen werden durch eine gezielte Vergrößerung des Neigungswinkels und Verringerung des Überstandes auf annähernd die gewünschte Endform weiterverdichtet. Insbesondere durch diese Vergrößerung des Neigungswinkels ergibt sich in allen Bereichen eines derartig hergestellten Formteiles eine sehr gleichmäßige optimale Verdichtung, die nach der Sinterung des Formteils eine ausreichende Festigkeit und Gasdichtheit des Formteiles gewährleistet.
Für bestimmte komplex geformte Formteile kann es zu einer weiteren Verbesserung der Grünlingshomogenität sinnvoll sein, die einzelnen Pressstempel in mehrere unabhängig voneinander bewegbare Einzelsegmente zu unterteilen.

Die noppen- und/oder stegförmigen Erhebungen können sowohl auf einer Seite, als auch auf beiden Seiten des scheiben- oder plattenförmigen Grundkörpers vorhanden sein, wobei die Anwendung des erfindungsgemäßen Verfahrens besonders im letzteren Fall besonders vorteilhaft ist.

Besonders bewährt hat es sich, wenn der Überstand in der ersten Pressstufe gegenüber dem Überstand im fertig gepressten Zustand um 30 % bis 100 % größer ist.

Weiters hat es sich bewährt, für die Seitenflächen der Erhebungen in der ersten Pressstufe einen Neigungswinkel im Bereich von 100° bis 130° und im fertig gepressten Zustand im Bereich von 115° bis 160° vorzusehen.

Insbesondere bei Anwendung des erfindungsgemäßen Verfahrens auf schwer verpressbare Ausgangspulver die zur Verbesserung der Pressbarkeit einen gewissen Anteil an Presshilfsmitteln wie Wachse benötigen, kann es vorteilhaft sein, den Pressling nach der ersten Pressstufe zur Entfemung der Presshilfsmittel vorzusintem. Dadurch wird eine nochmals verbesserte Dichte und Porenfreiheit des fertigen Formteiles.erreicht. Die Vorsinterung kann dabei je nach verwendetem Ausgangsmaterial bei Temperaturen zwischen etwa 600° und 1.200° während eines Zeitraumes von etwa einer oder mehreren Stunden unter anderem in Abhängigkeit von der Größe des Formteiles und der verwendeten Anlagen erfolgen. Gut verpressbare Ausgangspulver, beispielsweise aus Aluminium oder Kupfer, brauchen in der Regel nicht vorgesintert zu werden.

Interkonnektoren für Hochtemperatur-Brennstoffzellen wie z.B. Festelektrolyt Brennstoffzellen werden vielfach aus hoch chromhaltigen Legierungen mit mindestens 20 Gew.% Chromanteil wie z. B. aus ferritischen Stählen oder Chrombasislegierungen hergestellt. Da derartige Legierungen schwer verpressbar sind, hat sich die Anwendung des erfindungsgemäßen Verfahrens besonders bewährt.

Vielfach werden für derartige Interkonnektoren Chromlegierungen verwendet die neben Chrom aus Eisen sowie weiters aus einem oder mehreren zusätzlichen metallischen und/oder keramischen Legierungsanteilen von in Summe maximal 40 Gew.% bestehen. Hier hat es sich bewährt, die zusätzlichen Legierungsanteile als Vorlegierung mit Chrom und/oder Eisen in die pulverförmigen Ausgangsmaterialien einzubringen, was die Verpressbarkeit noch weiter verbessert. Neben diesen Legierungen auf Chrom- und Eisenbasis können als Werkstoffe für Interkonnektoren von Hochtemperatur Brennstoffzellen beispielsweise auch Metallkeramiken oder keramische Werkstoffe zur Anwendung kommen.

Im Folgenden wird die Erfindung an Hand eines Herstellungsbeispieles und an Hand von Figuren näher erläutert.

### Herstellungsbeispiel

Scheibenförmige Interkonnektoren für Hochtemperatur Brennstoffzellen aus einer Chrombasislegierung wurden nach dem erfindungsgemäßen Verfahren hergestellt. Abmessungen und Formgebung der Interkonnektoren:
Durchmesser 120 mm,
Gesamtdicke 2,5 mm,
Mittelbohrung 8,8 mm Durchmesser,

Grundkörper mit 1,3 mm Dicke, auf einer Seite des Grundkörpers um die Mittelbohrung und am Randbereich angeordnete stegförmige Erhebungen mit etwa 0,5 mm Höhe und 5 mm Breite, auf der gegenüberliegenden Seite des Grundkörpers um die Mittelbohrung und am Randbereich angeordnete stegförmige Erhebungen mit etwa 0,7 mm Höhe und 5 mm Breite, dazwischen in regelmäßigen Abständen und Reihen angeordnete noppenförmige Erhebungen in Form eines Kegelstumpfes mit etwa 1,4 mm Bodenfläche und 1 mm Deckfläche. Abstand der einzelnen Noppen und Reihen etwa 1 mm, Noppenhöhe 0,7 mm.

Zur Herstellung der Interkonnektoren wurde zuerst ein Pulveransatz bestehend aus 95 Gew. % elementarem Chrompulver und 5 Gew. % eines Vorlegierungspulvers aus Eisen mit 0,8 Gew. % Yttrium angefertigt. Die verwendeten Pulver wiesen Komgrößen im Bereich von 36 µm bis 100 µm auf. Die Pulveransätze wurden durch Einwiegen der einzelnen Pulver sowie Zugabe von ca. 1 Gew. % Mikrowachs als Presshilfsmittel und anschließendes 15 minütiges Mischen in einem Taumelmischer hergestellt. Der Pulveransatz wurde in die Matrize einer Pulverpresse eingefüllt.

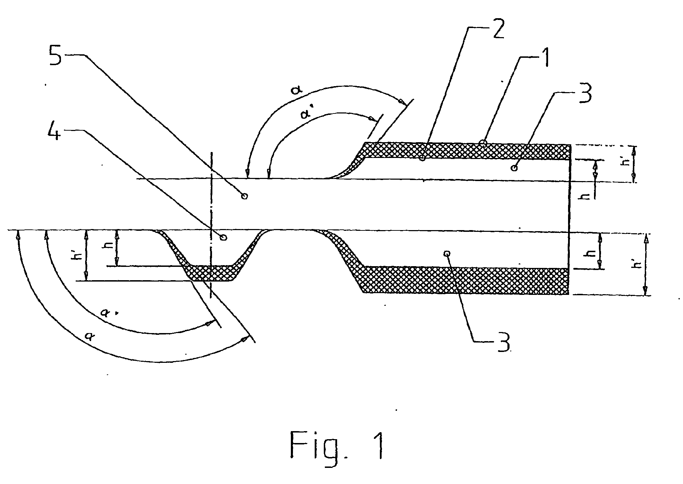

Figur 1 zeigt schematisch in vergrößertem Maßstab den Randabschnitt eines erfindungsgemäß hergestellten Interkonnektors im vorgepressten Zustand gemäß Kontur -1- und im fertiggepressten Zustand gemäß Kontur -2-.

In einem ersten Pressschritt wurde mit entsprechend geformten jeweils einteiligen Ober- und Unterstempeln der Pulveransatz auf die Außenkontur -1-gemäß Figur 1 verdichtet. Dabei wurden die stegförmigen Erhebungen -3-, und die noppenförmigen Erhebungen -4- mit Übermaß gepresst, während die Begrenzungsfläche des Grundkörpers -5- bis zu den Übergangsbereichen der Erhebungen -3-4- hin, auf angenäherte Endform gepresst wurde. Der Überstand h' der oberen stegförmigen Erhebungen -3- vom Grundkörper -5-war gegenüber ihrem Überstand h vom Grundkörper -5- im fertig gepressten Zustand um 66,7 % größer, während der Überstand h' der unteren stegförmigen Erhebungen -3- vom Grundkörper -5- gegenüber ihrem Überstand h vom Grundkörper -5- im fertig gepressten Zustand um 70 % größer war. Der Überstand h' der noppenförmigen Erhebungen -4- vom Grundkörper -5- war gegenüber ihrem Überstand h vom Grundkörper -5- im fertig gepressten Zustand um 28,6 % größer. Der Neigungswinkel α' der Seitenflächen der noppenförmigen und stegförmigen Erhebungen -4-3- betrug 120°.

Nach dem ersten Pressschritt wurden die Presslinge aus der Pressmatrize ausgestoßen, entnommen und zum Zwecke der Entwachsung in einem Ofen bei 1000 °C in Wasserstoffatmosphäre während eines Zeitraumes von 3 Stunden vorgesintert. Danach wurden die vorgesinterten Interkonnektoren zur Durchführung des zweiten Pressschrittes in eine abgeänderte Matrize der Pulvepresse eingelegt. Die Matrize wurde dabei derart maßlich abgeändert, dass ihr Durchmesser der Maßänderung der vorgesinterten Interkonnektoren im Durchmesser entsprach, welche durch das elastische Rückfedern des Presslings nach dem Ausstoßen aus der Matrize nach dem ersten Pressschritt und dem Sinterschwund im Vorsinterschritt zustandegekommen ist. Diese Maßänderung hängt von der Größe des hergestellten Presslings und von der Art des verwendeten Werkstoffes ab. Im vorliegenden Fall musste der Durchmesser der Matrize für den zweiten Pressschritt um 0,3 mm größer ausgeführt werden. Dementsprechend mussten auch die maßlichen Änderungen der Abstände der noppenförmigen und stegförmigen Erhebungen -4-3- bei der Auslegung von Ober- und Unterstempel für den zweiten Pressschritt berücksichtigt werden. Darüber hinaus wurden Ober- und Unterstempel so abgestimmt, dass die Interkonnektoren nach dem zweiten Pressschritt einschließlich der stegförmigen und noppenförmigen Erhebungen -3-4- weitestgehend in den Endabmessungen vorlagen. Weitestgehend heißt, dass der Schwund des abschließenden Sinterschrittes noch mitberücksichtigt war, so dass nach der Sinterung das endgültige Maß vorlag. Zur Ausführung des zweiten Pressschrittes wurden die Pressstempel auch so ausgeführt, dass der Neigungswinkel α der Seitenflächen der steg- und noppenförmigen Erhebungen -3-4- gegenüber dem Neigungswinkel α' im ersten Pressschritt vergrößert wurde und zwar auf 127,5 °. Durch diese Vergrößerung des Neigungswinkels ergibt sich eine optimale Verdichtung der steg- und noppenförmigen Erhebungen -3-4-. Gleichzeitig kommt das Material ins Fließen und bewirkt auch noch eine zusätzliche Verdichtung des Grundkörpers -5-. Nach dem zweiten Pressschritt wurden die Interkonnektoren zur weiteren Verdichtung und zum Zwecke der vollständigen chemischen Homogen isierung einer Sinterung in Wasserstoff bei 1450 °C über drei Stunden unterzogen.

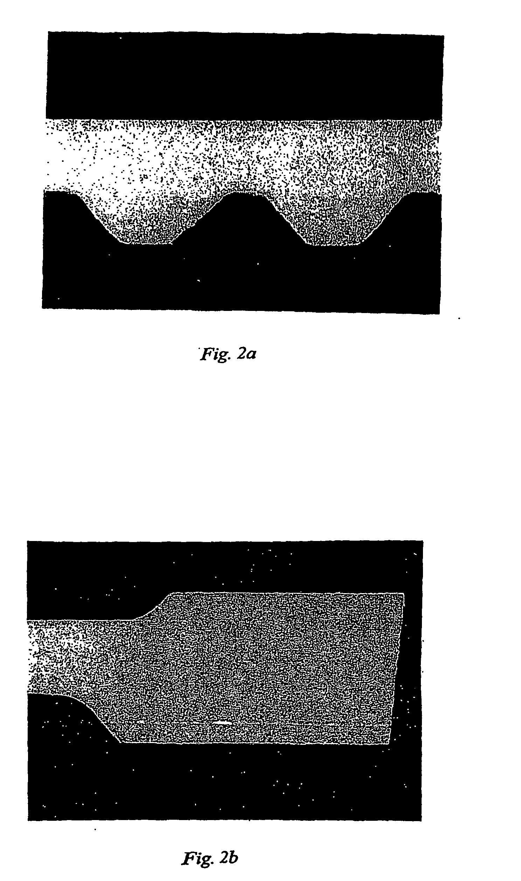

Zum Vergleich wurden Interkonnektoren aus demselben Werkstoff und mit denselben Abmessungen durch einstufiges Pressen nach dem Stand der Technik hergestellt. Die übrigen Herstellungsbedingungen waren dieselben wie bei den erfindungsgemäß hergestellten Interkonnektoren, lediglich die Entwachsung wurde als Vorstufe im Zuge des Sinterprozesses durchgeführt. Die Figuren 2a und 2b zeigen die Gefügeaufnahmen eines erfindungsgemäß hergestellten Interkonnektors in 15 facher Vergrößerung wobei die Figur 2a den Bereich der noppenförmigen Erhebungen -4- und die Figur 2b den Bereich der stegförmigen Erhebungen -3- wiedergibt.

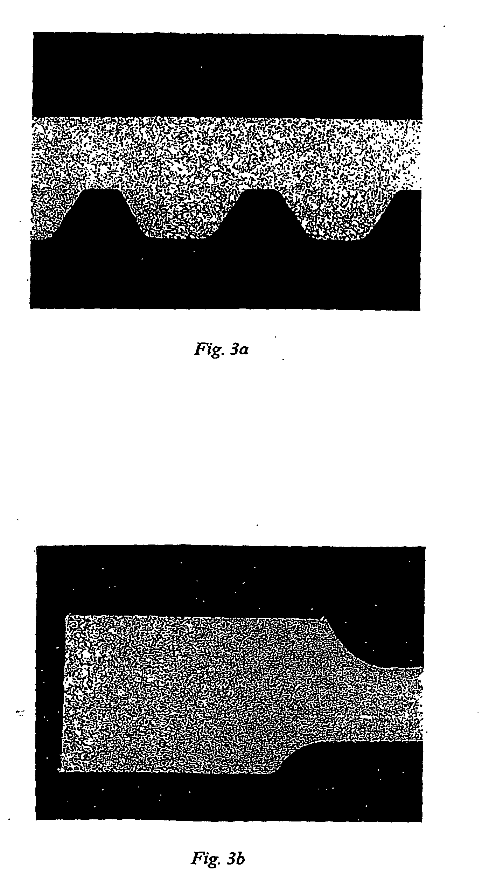

Die Figuren 3a und 3b zeigen die entsprechenden Gefügeaufnahmen eines Interkonnektors der nach dem Stand der Technik mit einem einstufigen Pressverfahren hergestellt wurde. Deutlich ist die größere Homogenität und Porenfreiheit und damit größere Dichte des erfindungsgemäß hergestellten Interkonnektors in praktisch allen Bereichen zu erkennen.

## Patentansprüche

1. Verfahren zur Herstellung eines Formteiles, bestehend aus einem scheiben- oder plattenförmigen Grundkörper (5) mit einer Vielzahl von noppen- und/oder stegförmigen Erhebungen (4, 3), die mit geneigten Seitenflächen in den Grundkörper (5) übergehen, durch endformnahes Pressen und Sintern pulverförmiger Ausgangsmaterialien,
**dadurch gekennzeichnet,**
**dass** das Pressen in einem zweistufigen Pressvorgang erfolgt, wobei in der ersten Stufe die Begrenzungsflächen des Grundkörpers (5) bis zu den Übergangsbereichen der Erhebungen (3, 4) hin auf zumindest angenäherte Endform gepresst und gleichzeitig die Erhebungen (3, 4) mit Übermaß gepresst werden, und zwar derart, dass ihr Überstand h' vom Grund körper (5) gegenüber dem Überstand h vom Grundkörper (5) im fertig gepressten Zustand um 10 % -150 % größer ist und dass ihre Seitenflächen einen Neigungswinkel α' im Bereich von 90° - 150° mit der jeweils angrenzenden Begrenzungsfläche des Grundkörpers (5) einschließen und wobei in der zweiten Stufe die Erhebungen (3, 4) auf zumindest angenäherte Endform gepresst werden, derart, dass der Neigungswinkel α' auf einen Wert α vergrößert wird der im Bereich von 95° - 170° liegt.

2. Verfahren zur Herstellung eines Formteiles nach Anspruch 1, **dadurch gekennzeichnet, dass** der Überstand h' gegenüber dem Überstand h im fertig gepressten Zustand um 30 % - 100 % größer ist.

3. Verfahren zur Herstellung eines Formteiles nach Anspruch 1 oder 2, **dadurch gekennzeichnet, dass** der Neigungswinkel α' im Bereich von 110° - 130° und der Neigungswinkel α im Bereich von 115° - 160° liegt.

4. Verfahren zur Herstellung eines Formteiles nach einem der Ansprüche 1 bis 3, **dadurch gekennzeichnet, dass** der Pressling nach der ersten Pressstufe vorgesintert wird.

5. Verfahren zur Herstellung eines Formteiles nach einem der Ansprüche 1 bis 4, **dadurch gekennzeichnet, dass** das Formteil aus einer Legierung mit mindestens 20 Gew.% Chromanteil hergestellt wird.

6. Verfahren zur Herstellung eines Formteiles nach Anspruch 5, **dadurch gekennzeichnet, dass** die Legierung neben Chrom aus Eisen sowie weiters aus einem oder mehreren zusätzlichen metallischen und/oder keramischen Legierungsanteilen von in Summe maximal 40 Gew.% besteht und dass die zusätzlichen Legierungsanteile als Vorlegierung mit Chrom und/oder Eisen in die pulverförmigen Ausgangsmaterialien eingebracht werden.

7. Verfahren zur Herstellung eines Formteiles nach Anspruch 5 oder 6, **dadurch gekennzeichnet, dass** das Formteil der Interkonnektor einer Brennstoffzelle ist.

## Revendications

1. Procédé de fabrication d'une ébauche, se composant d'un corps de base (5) en forme de disque ou de plaque portant une multiplicité de surélévations (4,3) en forme de boutons ou de tiges, qui se raccordent au corps de base (5) par des surfaces latérales inclinées, par compression et frittage de produits de départ pulvérulents jusqu'à une forme proche de la finale
**caractérisé en ce que**
la compression s'effectue dans un processus de compression en deux étapes, dans lequel les surfaces limites du corps de base (5) sont comprimées dans la première étape jusqu'aux zones de raccordement des surélévations (3, 4) jusqu'à atteindre une forme au moins proche de la finale, et les surélévations (3, 4) sont simultanément comprimées en ménageant des surdimensionnements, ceci d'une manière telle que la saillie h' de chaque surélévation par rapport au corps de base (5) est supérieure de 10 % à 150 % à sa saillie h par rapport au corps de base (5) dans l'état fini et que ses surfaces latérales incluent un angle d'inclinaison α' compris dans la plage de 90° à 150° avec la surface limite respectivement adjacente du corps de base (5), et dans lequel les surélévations (3, 4) sont comprimées dans la deuxième étape jusqu'à atteindre une forme au moins proche de la finale d'une manière telle que l'angle d'inclinaison α' augmente jusqu'à une valeur a comprise dans la plage de 95° à 170°.

2. Procédé de fabrication d'une ébauche selon la revendication 1, **caractérisé en ce que** la saillie h' est supérieure de 30 % à 100 % à la saillie h dans l'état comprimé fini.

3. Procédé de fabrication d'une ébauche selon la revendication 1 ou 2, **caractérisé en ce que** l'angle d'inclinaison α' est compris dans la plage de 110° à 130° et l'angle d'inclinaison α est compris dans la plage de 115° à 160°.

4. Procédé de fabrication d'une ébauche selon l'une quelconque des revendications 1 à 3, **caractérisé en ce que** l'ébauche comprimée est préfrittée après la première étape de compression.

5. Procédé de fabrication d'une ébauche selon l'une quelconque des revendications précédentes, **caractérisé en ce que** l'ébauche est fabriquée à partir d'un alliage à teneur en chrome d'au moins 20% en poids.

6. Procédé de fabrication d'une ébauche selon la revendication 5, **caractérisé en ce que** l'alliage se compose, en plus du chrome, de fer ainsi que d'autres teneurs en un ou plusieurs alliages métalliques et/ou céramiques additionnels dont la somme des teneurs atteint au maximal 40% en poids, et que les teneurs additionnelles en alliages sont introduites dans les produits de départ pulvérulents sous forme de préalliages de chrome et/ou de fer.

7. Procédé de fabrication d'une ébauche selon la revendication 5 ou 6, **caractérisé en ce que** l'ébauche est l'interconnecteur d'une pile à carburant.

## Claims

1. A process for the production of a moulding, consisting of a disk- or plate-shaped base member (5) with a plurality of knob- and/or web-shaped elevated portions (4, 3), which merge with inclined side faces into the base member (5), by near net shape pressing and sintering of pulverulent starting materials,
**characterised in that**
pressing proceeds in a two-stage pressing operation, wherein in the first stage the boundary surfaces of the base member (5) up to the transition zones of the elevated portions (3, 4) are pressed at least approximately into final shape and simultaneously the elevated portions (3, 4) are pressed oversize, specifically such that their elevation h' from the base member (5) is lot-150% larger than the elevation h from the base member (5) in the finished pressed state and that their side faces form an angle of inclination α' in the range from 90°-150° with the particular adjacent boundary surface of the base member (5) and wherein in the second stage the elevated portions (3, 4) are pressed at least approximately into final shape, such that the angle of inclination α' is increased to a value a which is in the range from 95°-170°.

2. A process for the production of a moulding according to claim 1, **characterised in that** the elevation h' is 30%-100% larger than the elevation h in the final pressed state.

3. A process for the production of a moulding according to claim 1 or claim 2, **characterised in that** the angle of inclination α' is in the range from 110°-130° and the angle of inclination α is in the range from 115°-160°.

4. A process for the production of a moulding according to any one of claims 1 to 3, **characterised in that** the pressed moulding is presintered after the first pressing stage.

5. A process for the production of a moulding according to any one of claims 1 to 4, **characterised in that** the moulding is produced from an alloy with a chromium fraction of at least 20 wt.%.

6. A process for the production of a moulding according to claim 5, **characterised in that**, apart from chromium, the alloy consists of iron and furthermore of one or more additional metallic and/or ceramic alloy constituents amounting in total to at most 40 wt.% and that the additional alloy constituents are introduced into the pulverulent starting materials as a prealloy with chromium and/or iron.

7. A process for the production of a moulding according to claim 5 or claim 6, **characterised in that** the moulding is a fuel cell interconnector.
